**Europäisches Patentamt**

**European Patent Office**

**Office européen des brevets**

(11) Veröffentlichungsnummer : **0 480 903 A1**

# (12) EUROPÄISCHE PATENTANMELDUNG

(21) Anmeldenummer : **91890204.0**

(22) Anmeldetag : **12.09.91**

(51) Int. Cl.$^5$ : **B21C 27/00, B23P 11/02**

(30) Priorität : **12.10.90 AT 2059/90**

(43) Veröffentlichungstag der Anmeldung :
**15.04.92 Patentblatt 92/16**

(84) Benannte Vertragsstaaten :
**CH DE FR IT LI**

(71) Anmelder : **BÖHLER EDELSTAHL GmbH
Mariazellerstrasse 25
A-8605 Kapfenberg (AT)**

(72) Erfinder : **Mitter, Werner, Dr.
Laintal 15
A-8793 Trofaiach (AT)**

(54) **Rezipient mit flacher Aufnahmekammer für Strangpressen und Verfahren zu deren Herstellung.**

(57) Die vorliegende Erfindung betrifft einen Rezipienten für Strangpressen und ein Verfahren zu seiner Herstellung, bei dem eine Innenbüchse (3), die mit einer in Querachsrichtung flachen, durch Ausnehmungen begrenzten Aufnahmekammer (2) versehen ist, mit mindestens einem äußeren Bauteil (4) durch Schrumpfung verbunden ist. Erfindungsgemäß ist vorgesehen, daß in der der Innenoberfläche benachbarten Zone der Innenbüchse (3) zumindest im Bereich der Innenoberflächen (31, 31') der Ausrundungen erhöhte Druckspannungen durch unrunde Querschnittsform(en) des(der) Bauteile(s) und/oder durch einen Flachteil (6) zwischen den Rezipiententeilen (3,4,5) aufgebracht sind.

EP 0 480 903 A1

Die Erfindung betrifft einen Rezipienten für Strangpressen bestehend aus einer Innenbüchse mit einem in Querachsrichtung flachen, durch Ausrundungen begrenzten Durchbruch in Längserstreckung und mindestens einem äußeren, im wesentlichen konzenrisch angeordneten, durch Schrumpfung mit der Innenbüchse verbundenen Bauteil.

Weiters betrifft die Erfindung ein Verfahren zur Herstellung von Rezipienten gemäß dem Oberbegriff der Ansprüche 6 und 10.

Rezipienten oder Blockaufnehmer mit flachem Durchbruch oder flacher Aufnahmekammer werden für die Herstellung von dünnwandigen Flachprofilen aus Metallen oder Legierungen in Strangpressen eingesetzt. Der Strangpreßvorgang, z.B. für Aluminium, erfolgt zumeist isotherm, sodaß Rezipiententeile, insbesondere die Innenbüchse des Rezipienten, durch Heizmittel auf Arbeitstemperatur von 400°C bis 550°C vorgewärmt bzw. bei diesen in Betrieb gehalten werden. Beim Auspressen des Blockes durch eine formgebende Matrize treten in der Regel Innendrücke von 300 bis 500 N/mm$^2$ auf, welche bei Sonderwerkstoffen und/oder Sonderprofilen noch höher sein können. Derartig hohe Innendruckbelastungen führen zu einer elastischen Verformung bzw. einer elastischen Aufweitung des Rezipienten während des Preßvorganges. Die Innenwand der Innenbüchse erfährt dadurch, insbesondere an der Schmalseite bzw. an den Ausrundungen des Durchbruches, pulsierende oder wechselnde mechanische Spannungen. Durch unstete Zugspannungen können jedoch, insbesondere bei erhöhten Temperaturen, schon bei niedrigen mechanischen Belastungen des Werkstoffes Risse entstehen, welche gegebenenfalls ein Auswechseln der Innenbüchse erfordern oder zum Bruch des Rezipienten führen. Um eine Rißinitiationsspannung des Materials im Durch- bruchsbereich der Innenbüchse nicht zu überschreiten, wurde schon versucht, die Anzahl der konzentrisch angeordneten Bau- bzw. Stützelemente zu vergrößern und höhere Schrumpfspannungen anzuwenden. Diese Maßnahmen konnten jedoch nur teilweise Abhilfe schaffen. An der Schmalseite des Durchbruches bzw. in den Ausrundungen, insbesondere in den Querachsenbereichen, treten geometrisch bedingt weiterhin Spannungsspitzen mit unsteter Wirkungsdauer auf und können dabei Materialschädigungen und Risse verursachen. Weiters wurde bereits versucht ( DE-PS-2 417 815), in die Innenwandung von Form- bzw. Innenbüchse an deren die höchsten Spannungen aufweisenden Bereichen eine in Preßrichtung verlaufende Nut einzuformen und diese mit einer elastischen Schweißnaht wieder zu verschließen. Nachteilig dabei ist, daß neben der Schweißnaht in der wärmebeeinflußten Zone des Werkstoffes der Innenbüchse weiterhin Risse entstehen können.

Der Erfindung liegt die Aufgabe zugrunde, einen Rezipienten für Strangpressen mit einem in Querachsrichtung flachen, durch Ausrundungen begrenzten Durchbruch zu schaffen, bei welchem bei hohen Innendrücken die Gefahr der Rißbildung auch im Bereich der Schmalseiten des Durchbruches vermieden wird und dessen Standzeit und Betriebssicherheit erhöht werden.

Die Aufgabe wird dadurch gelöst, daß in der der Innenoberfläche benachbarten Zone der Innenbüchse, zumindest im Bereich der Innenoberfläche der Ausrundungen, erhöhte Druckspannungen im Werkstoff gebildet sind. Vorteilhafte Ausgestaltungen und Weiterbildungen der Erfindung sind in den Unteransprüchen gekennzeichnet.

Es wurde gefunden, daß die Entstehung von Rissen in den Innenwandungen der Innenbüchse trotz hoher Innendruckbelastungen während der Strangpreßvorgänge, welche unstete pulsierende oder wechselnde Materialbelastungen bewirken, verhindert werden kann, wenn zumindest im Bereich der Ausrundungen in der innenoberflächennahen Zone der Innenbüchse erhöhte Druckspannungen vorliegen

Der Erfindung liegt eine weitere Aufgabe zugrunde, ein Verfahren zur Herstellung von Rezipienten mit flachem Durchbruch zu schaffen, mit welchem in den innenoberflächennahen Zonen der Innenbüchse Druckspannungen gebildet werden.

Diese Aufgabe wurde dadurch gelöst, daß zumindest von einem Bauteil zumindest eine für die Verbindung vorgesehene Oberfläche im Querschnitt unrund bzw. mit senkrecht zur Längsachse des Rezipienten in den Querachsrichtungen unterschiedlichem Durchmesser gefertigt wird und die Bauteile durch Schrumpfung derart verbunden werden, daß durch die Unrundheit der Oberfläche(n) im wesentlichen senkrecht zur Längserstreckung des Durchbruchsquerschnittes auf die Innenbüchse ein vergrößerter, im wesentlichen radial wirkender Druck aufgebracht und diese elastisch verformt wird und in der der Innenwandung benachbarten Zone zumindest im Bereich der Innenoberflächen der Ausrundungen des Durchbruches vergrößerte Druckspannungen gebildet werden.

Besonders vorteilhaft ist es, wenn die Innenbüchse über deren gesamte Länge in Querachsrichtung bzw. in Richtung der Längserstreckung des Durchbruchsquerschnittes mit einem geringeren Durchmesser als senkrecht zur Querachsrichtung gefertigt wird und der (die) weiter(n) Bauteil(e), z. B. Außenmantel und/oder Zwischenbüchse, die durch Aufschrumpfen auf die Innenbüchse mit dieser verbunden wird( werden), mit einem kreisrunden Querschnitt der Verbindungsfläche(n) hergestellt ist (sind).

Das erfindungsgemäße Verfahren hat den Vorteil, daß durch einfache bearbeitungstechnische Maßnahmen hohe Druckspannungen, insbesondere in den oberflächennahen Zonen der Innenbüchse, welche im Bereich der Ausrundungen des Durchbruches liegen, eingestellt werden können. Weiters ist vorteilhaft, daß die Größe und die Verteilung der Druckspannungen in der Wandung der Innenbüchse leicht durch das Ausmaß der Unrundheit und der Form des Querschnittes der Oberfläche der Teile einstellbar sind.

Bei einem Verfahren der eingangs genannten Art kann auch erfindungsgemäß vorgesehen sein, daß auf der Oberfläche zumindest eines Bauteile in Längserstreckung zumindest ein Flachteil (6) mit einer Querschnittslänge von weniger als der Hälfte des Umfanges des Oberflächenquerschnittes angeordnet und dieser Bauteil mit einem weiteren Bauteil durch Schrumpfung verbunden wird. Vorteilhaft ist dabei, wenn der (die) Flachteil(e) im wesentlichen parallel zur bzw. im entferntesten Bereich der Querachse in mindestens einer Verbindungsfläche der Rezipiententeile angeordnet wird ( werden) und wenn der(die) Flächenteil(e) mit einer im Querschnitt sich gegen beide Enden verringernden Dicke gefertigt ist (sind). Bei dieser Ausführungsform ist der Vorteil gegeben, daß auch mit kreisrunden Querschnitten hergestellte Teile, welche besonders einfach zu fertigen sind, verwendet werden können. Die Flachteile können dabei aus Metall wie zum Beispiel Kupfer, austenitischem Stahl und dergleichen oder aus Kunststoff, Keramik oder Sonderwerkstoffen bestehen. Es ist auch möglich, beide Verfahren zu kombinieren.

Im folgenden wird die Erfindung anhand der Zeichnung näher erläutert.

In den Zeichnungen stellen dar:

Fig. 1 einen Querschnitt durch einen Rezipienten

Fig. 1a bis 1c Querschnitte einer Innenbüchse, einer Zwischenbüchse und eines Außenmantels eines Rezipienten

Fig. 2 einen Querschnitt durch einen Rezipienten mit Flachteilen

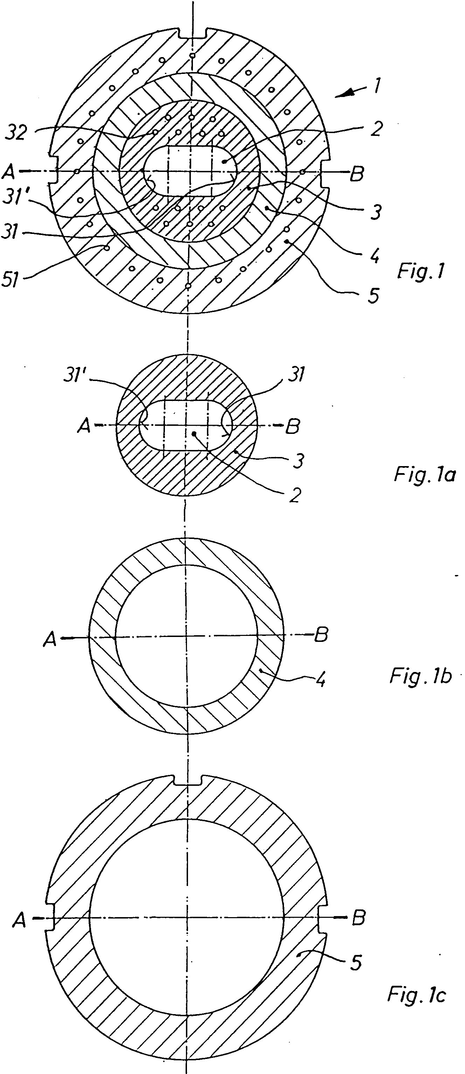

Aus Fig. 1 ist schematich ein dreiteiliger Rezipient 1 im Querschnitt ersichtlich. Ein flacher Durchbruck 2 bzw. eine flache Aufnehmerkammer für einen Block ist zentrisch in einer Innenbüchse 3 angeordnet, welche ihrerseits durch eine konzentrische Zwischenbüchse 4 und einen Außenmantel 5 umgeben ist. In der Innenbüchse 3 und im Außenmantel 5 befinden sich Heizmittelbohrungen 32, 51 mit Heizstäben oder dergleichen, mit welchen der Rezipient 1, insbesondere die Innenbüchse 3, auf eine Betriebstemperatur von z.B. 500 - 540 C erwärmbar ist.

Während der Pressungen entstehen auf Grund von hohen Innendrücken im Durchbruch elastische Aufweitungen des Rezipienten 1. Wenn auch, wie bei herkömmlichen Rezipienten, eine Verbindung von einer Innenbüchse 3 mit einer Zwischenbüchse 4 und weiters mit einem Außenmantel 5 durch ein Aufschrumpfen erfolgt, können geometrisch bedingt Zugspannungen im Mantel der Innenbüchse 3, insbesondere im Bereich der Innenoberfläche 31 und 31' der Ausrundungen, gebildet werden.

Überschreiten die, bedingt durch die Arbeitsweise unsteten Zugspannungen bei erhöhten Temperaturen einen Rißinitiationswert des Materials, so ergeben sich Rißbildung und Rißfortschritt.

Überrraschenderweise hat sich gezeigt, daß durch Druckspannungen an den Innenoberflächen 31, 31' der Innenbüchse 3 auch bei Betriebstemperaturen von 540°C es gelingt, eine Rißbildung zu verhindern. Weiters ist es dadurch möglich, die Dimensionen und/oder Belastung von Stützteilen wie Zwischenbüchse 4 und Außenmantel 5 zu verringern und wirtschaftlich Vorteile zu erzielen.

Erfindungsgemäß wird dabei so vorgegangen, daß zumindest eine Oberfläche, die für die Schrumpfverbindung der Teile vorgesehen ist, im Querschnitt unrund bzw. mit einem senkrecht zur Querachsrichtung AB größeren Durchmesser gefertigt wird. Beim Aufeinanderschrumpfen der Teile werden somit höhere Drücke auf diejenigen Oberflächenbereiche der Innenbüchse 3 gebildet, die im wesentlichen senkrecht zur Querachsrichtung AB bzw. parallel zur Längserstreckung des Durchbruchquerschnittes 2 liegen. Dadurch ergeben sich Druckspannungen, insbesondere in den oberflächennahen Zonen der Ausrundungen. Weiters wird damit erreicht, daß den bei hohem Innendruck auf Grund der Geometrie des Durchbruches senkrecht zur Querachsrichtung AB nach außen wirkenden größeren Kräften größere Schrumpfkräfte in der gleichen Richtung entgegenwirken, wodurch die Stützteile kleiner gefertigt und die Wirtschaftlichkeit erhöht werden können.

Fig. 1a zeigt im Querschnitt eine Innenbüchse 3 mit einem flachen Durchbruch 2. Erfindungsgemäß wird vorzugsweise dieser Teil mit einem größeren Durchmesser senkrecht zur Querachsrichtung AB gefertigt , auf welchen beispielweise eine einen kreisrunden Querschnitt aufweisende Zwischenbüchse 4 und ein Außenmantel 5 aufgeschrumpft werden.

Es kann jedoch die in Fig. 1b dargestellte Zwischenbüchse 4 eine geringere Wandstärke im Bereich der Querachsrichtung AB aufweisen oder der aus Fig. 1c ersichtliche Außenmantel 5 mit einem größeren Innendurchmesser in Querachsrichtung AB hergestellt sein.

In Fig. 2 ist ein Querschnitt durch einen Rezipienten dargestellt, bei welchem zwischen Innenbüchse 3 und Zwischenbüchse 4 Flachteile 6 und 6' angeordnet sind. Die Anordnung der Flachteile 6, 6' ist dabei derart, daß durch das Aufschrumpfen der im Querschnitt runden Zwischenbüchse 4 und in der Folge des Außenmantels 5 auf die Innenbüchse ein vergrößerter radialer Druck in eine Richtung senkrecht zur Querachsrichtung AB aufgebracht wird und sich diese elastisch oval verformt. Dadurch werden in den an den Innenoberflächen 31 und 31′ des Durchbruches 2 naheliegenden Zonen der Innenbüchse 3 vergrößerte Druckspannungen gebildet. Die Dicke der Flachteile 6, 6′ ist dabei im Bereich senkrecht zur Querachsrichtung AB am größten und verringert sich in beiden Richtungen auf 0. Dadurch wird eine Kerbwirkung vermieden. Flachteile 6,6′ können auch zusätzlich oder ausschließlich zwischen Zwischenbüchse 4 und Außenmantel 5 vorgesehen sein.

**Patentansprüche**

1. Rezipient für Strangpressen bestehend aus einer Innenbüchse (3) mit einem in Querschnittsrichtung (AB) flachen, durch Ausrundungen begrenzten Durchbruch (2) in Längserstreckung und mindestens einem äußeren, im wesentlichen konzentrisch angeordneten, durch Schrump - fungen mit der Innenbüchse (3) verbundenen Bauteil (4), dadurch gekennzeichnet, daß in der der Innenoberfläche benachbarten Zone der Innenbüchse (3), zumindest im Bereich der Innenoberfläche ( 31, 31′) der Ausrundungen, erhöhte Druckspannungen im Werkstoff gebildet sind.

2. Rezipient nach Anspruch 1, dadurch gekennzeichnet, daß die erhöhten Druckspannungen unter Verwendung von zumindest einem eine unrunde, insbesondere elliptische, Querschnittsform, zumindest einer Oberfläche, aufweisenden Bauteil ( 3,4,5), welcher mit einem weiteren Bauteil in Verbindung steht, gebildet sind.

3. Rezipient nach Anspruch 1, dadurch gekennzeichnet, daß die erhöhten Druckspannungen unter Verwendung von zumindest einem auf einen Teilbereich des Querschnittes der Verbindungsfläche(en) begrenzten, sich zumindest teilweise in Längsrichtung des Rezipienten (1) erstreckenden Flachteil (6) zwischen den durch Schrumpfsitz verbundenen Rezipiententeilen ( 3,4,5) gebildet sind.

4. Rezipient nach Anspruch 1 oder 3, dadurch gekennzeichnet, daß der (die) Flachteil(e) ( 6,6′) im wesentlichen parallel zur bzw. im entferntesten Bereich von der Querachse ( AB) in mindestens einer Verbindungsfläche der Rezipiententeile ( 3,4,5) angeordnet ist (sind).

5. Rezipient nach einem der Ansprüche 1,3 oder 4, dadurch gekennzeichnet, daß der (die) Flachteil(e) ( 6,6′) im Querschnitt eine gegen diese beiden Enden sich verringernde Dicke aufweist(en).

6. Verfahren zur Herstellung eines Rezipienten (1) für Strangpressen bestehend aus einer Innenbüchse (3) mit einem in Querachsrichtung (AB) flachen durch Ausrundungen begrenzten Durchbruch (2) in Längsrichtung des Rezipienten und mindestens einem äußeren, im wesentlichen konzentrisch angeordneten, durch Schrumpfung mit der Innenbüchse (3) verbundenen weiteren Bauteil ( 4,5), bei welchem Rezipienten die Innenbüchse (3) erhöhte Druckspannungen in der der Innenwandung benachbarten Zone, zumindest im Bereich der Innenoberflächen ( 31,31′) der Ausrundungen des Durchbruches (2) aufweist, dadurch gekennzeichnet, daß zumindest von einem Bauteil (3,4,5) zumindest eine für die Verbindung der Bauteile miteinander vorgesehene Oberfläche im Querschnitt unrund bzw. mit senkrecht zur Längsachse des Rezipienten in dessen Querachsrichtungen unterschiedlichen Durchmessern hergestellt wird und die Bauteile (3,4,5) durch Schrumpfung derart verbunden werden, daß durch die Unrundheit des Querschnittes der Oberfläche(en) im wesentlichen senkrecht zur Längserstreckung des Durchbruchquerschnittes (2) auf die Innenbüchse (3) ein vergrößerter, im wesentlichen in radialer Richtung wirkender, Druck aufgebracht und die Innenbüchse elastisch verformt wird und in der der Innenoberfläche des Durchmessers (2) benachbaren Zone zumindest im Bereich der Innenoberfläche (31,31′) der Ausrundung des Durchbruches (2) vergrößerte Druckspannungen gebildet werden.

7. Verfahren nach Anspruch 6, dadurch gekennzeichnet, daß die Innenbüchse (3) über deren gesamte Länge in Querschnittsrichtung (AB) bzw. in Richtung der Längserstreckung des Durchbruchquerschnittes mit einem geringeren Durchmesser als senkrecht zur Querachsrichtung ( AB) gefertigt wird und der (die) weitere(n) Bauteil(e), zum beispiel Außenmantel (5) und/oder Zwischenbüchse (4), die durch Aufschrumpfen auf die Innenbüchse (3) mit dieser verbunden wird(werden), mit einem kreisrunden Querschnitt der Verbindungsfläche(n) hergestellt ist ( sind).

8. Verfahren nach Anspruch 6, dadurch gekennzeichnet, daß der unrunde Querschnitt der Oberfläche von zumindest einem Bauteil (3,4,5) ellipsenförmig gefertigt wird.

9. Verfahren nach Anspruch 6 oder 8, dadurch gekennzeichnet, daß zumindest zwei Bauteile des Rezipienten (1) mit unrunden Querschnitten der Oberfläche, die bei der Aufschrumpfung eine Verbindungsfläche bilden, hergestellt werden.

10. Verfahren zur Herstellung eines Rezipienten (1) für Strangpressen bestehend aus einer Innenbüchse (3) mit einem in Querachsrichtung ( AB) flachen, durch Ausrundungen begrenzten Durchbruch (2) in Längsrichtung des Rezipienten und mindestens einem äußeren, im wesentlichen konzentrisch angeordneten, durch Schrumpfung mit der Innenbüchse (3) verbundenen weiteren Bauteil (4,5), bei welchem Rezipienten die Innenbüchse (3) erhöhte Druckspannungen in der der Innenwandung benachbarten Zone, zumindest im Bereich der Innenoberflächen ( 31,31′) der Ausrundungen des durchbruches (2) aufweist, dadurch gekennzeichnet, daß auf der Oberfläche zumindest eines Bauteiles in Längserstreckung zumindest ein Flachteil (6) mit einer Querschnittslänge von weniger als der Hälfte des Umfanges des Oberflächenquerschnittes angeordnet und dieser Bauteil mit einem weiteren Bauteil durch Schrumpfung verbunden wird.

11. Verfahren nach Anspruch 10, dadurch gekennzeichnet, daß der (die) Flachteil(e) ( 6,6′) im wesentlichen parallel zur bzw. im entferntesten Bereich der Querachse (AB) in mindestens einer Verbindungsfläche der Rezipiententeile ( 3,4,5) angeordnet wird (werden).

12. Verfahren nach einem der Ansprüche 10 oder 11, dadurch gekennzeichnet, daß der (die) Flachteil(e) ( 6,6′) mit einer im Querschnitt sich gegen beide Enden verringernder Dicke gefertigt wird (werden).

Fig.1

Fig.1a

Fig.1b

Fig.1c

EP 0 480 903 A1

Europäisches
Patentamt

**EUROPÄISCHER RECHERCHENBERICHT**

Nummer der Anmeldung

| | **EINSCHLÄGIGE DOKUMENTE** | | EP 91890204.0 |
|---|---|---|---|

| Kategorie | Kennzeichnung des Dokuments mit Angabe, soweit erforderlich, der maßgeblichen Teile | Betrifft Anspruch | KLASSIFIKATION DER ANMELDUNG (Int Cl.⁵) |
|---|---|---|---|
| Y | <u>DE - A - 2 434 221</u><br>(UBE INDUSTRIES LTD)<br>   * Seite 7, 2. Absatz; Seite 8, 1. Absatz; Fig. 4-7 *<br>-- | 1 | B 21 C 27/00<br>B 23 P 11/02 |
| D,Y | <u>DE - A - 2 417 815</u><br>(ALUMINIUM WALZWERKE SINGEN)<br>   * Patentanspruch 8; Fig. 1,2 * | 1 | |
| A | | 6 | |
| A | <u>DE - A - 3 512 574</u><br>(SMS HASENCLEVER MASCHINEN-FABRIK GMBH)<br>   * Patentansprüche 1,3; Fig. 1,2 *<br>---- | 3,4,5, 12 | |
| | | | RECHERCHIERTE SACHGEBIETE (Int Cl⁵) |
| | | | B 21 C 23/00<br>B 21 C 27/00<br>B 23 P 11/00<br>B 23 P 19/00 |

Der vorliegende Recherchenbericht wurde für alle Patentansprüche erstellt.

| Recherchenort | Abschlußdatum der Recherche | Prüfer |
|---|---|---|
| WIEN | 28-11-1991 | BISTRICH |